# EUROPÄISCHE PATENTANMELDUNG

(11) **EP 0 538 601 A2**
(43) Veröffentlichungstag der Anmeldung: **28.04.1993**
(21) Anmeldenummer: 92115117.1
(22) Anmeldetag: 04.09.1992
(51) Int. Cl.: H01B 17/26, H02G 3/22, F16F 7/00

(54) **Leitungsdurchführung**

(30) Priorität: 25.10.1991 DE 4135234
(71) Anmelder: ROBERT BOSCH GMBH, 70442 Stuttgart (DE)
(72) Erfinder: Schneider, Steffen, Dipl.-Ing., W-7146 Tamm-Hohenstange (DE); Just, Bernhardt, Dipl.-Ing., W-7053 Kernen (DE); Gruenwald, Werner, Dr. Dipl.-Phys., W-7016 Gerlingen (DE); Weissner, Roland, Dipl.-Ing. (FH), W-7731 Unterkirnach (DE)

(57) **Zusammenfassung**

Bekannt sind Leitungsdurchführungen, bei denen metallische Leiter mit Glas in eine Trennwand eingeschmolzen sind. Zwecks Anschließen einer Leitung muß die Trennwand beidseitig zugänglich sein.

Bei der hier vorgeschlagenen Leitungsdurchführung wird ein Verbundkörper (22) aus Trägermaterial (24) und Leitermaterial (71, 72) gebildet. An dem Leitermaterial (71, 72) können Leiter (81, 82) auf einfache Weise angeschlossen werden. Eine Dichtung (46) trennt zwei Räume (101, 102) voneinander.

Die vorgeschlagene Leitungsdurchführung soll insbesondere bei Stoßdämpfern für Fahrzeuge verwendet werden.

## Beschreibung

### Stand der Technik

Die Erfindung geht aus von einer Leitungsdurchführung nach der Gattung des Anspruchs 1, insbesondere bei einem Stoßdämpfer, für eine aus einem ersten Raum in einen zweiten Raum führende Leitung bzw. von einem Verfahren zur Herstellung dieser Leitungsdurchführung nach der Gattung des Anspruchs 10.

Zur Durchleitung einer Leitung aus einem ersten Raum in einen zweiten Raum durch eine die beiden Räume voneinander trennende Trennwand gibt es mehrere bekannte Möglichkeiten. Entweder besteht bei den bekannten Lösungen die Gefahr, daß die Leitungsdurchführung zu einer möglichen Undichtheit führen kann und/oder bei der Montage ergeben sich erhebliche Schwierigkeiten.

Es gibt z. B. die Möglichkeit, einen metallischen Leiter als ein Teilstück einer Leitung unter Zuhilfenahme von Glas in eine Trennwand einzuschmelzen, um mit dem Glas abzudichten und gegenüber der Trennwand elektrisch zu isolieren. Beiderseits der Trennwand steht der metallische Leiter etwas über die Trennwand hinaus, so daß bei der Montage der Trennwand an den metallischen Leiter eine Leitung angeschlossen werden kann. Hier ist es jedoch erforderlich, daß die Trennwand auf beiden Seiten zwecks Montage zugänglich ist. Insbesondere wegen der notwendigen Zugänglichkeit bereitet diese Art der Leitungsdurchführung bei einem Stoßdämpfer Schwierigkeiten, wegen den normalerweise in einem Stoßdämpfer herrschenden sehr beengten Einbauverhältnissen. Auch ist es bei bisherigen Leitungsdurchführungen kaum möglich, eine prüffähige Vormontagegruppe mit den in den Stoßdämpfer einzubauenden elektrischen Bauteilen zu bilden.

### Vorteile der Erfindung

Demgegenüber weist die erfindungsgemäß ausgeführte Leitungsdurchführung mit den kennzeichnenden Merkmalen des Anspruchs 1 den Vorteil auf, daß die Trennung der beiden Räume durch die Leitungsdurchführung nicht beeinträchtigt ist und daß sich die Leitung besonders einfach montieren läßt. Durch das erfindungsgemäße Verfahren mit den kennzeichnenden Merkmalen des Anspruchs 10 läßt sich die Leitungsdurchführung besonders vorteilhaft herstellen. Es besteht vorteilhafterweise insbesondere keine Gefahr einer hydraulischen oder pneumatischen Verbindung der beiden Räume über die Leitungsdurchführung.

Durch die in den Unteransprüchen aufgeführten Maßnahmen sind vorteilhafte Weiterbildungen und Verbesserungen der Leitungsdurchführung und des Verfahrens zur Herstellung der Leitungsdurchführung möglich.

Durch Vorsehen mehrerer elektrisch voneinander getrennter Leitermaterialien an einem Trägermaterial eines Verbundkörpers der Leitungsdurchführung lassen sich in vorteilhafter Weise mehrere Leitungen und/oder mehrere elektrische Leiter einer Leitung durch die Leitungsdurchführung aus einem ersten Raum in einen zweiten Raum hindurchführen.

Das aus einem Kunststoff herstellbare Trägermaterial bietet den Vorteil, daß die in das Trägermaterial eingeformten Leitermaterialien elektrisch hervorragend voneinander getrennt sind.

Sind das Trägermaterial und das Leitermaterial des Verbundkörpers aus einem gleichartigen Harz hergestellt, so bietet dies den Vorteil, daß das Trägermaterial und das Leitermaterial eine besonders feste mechanische Verbindung zueinander eingehen. Auch läßt sich auf diese Weise eine besonders ungestörte, glatte Oberfläche des Verbundkörpers herstellen. Diese Oberfläche ist vorteilhafterweise besonders gut als Anlagefläche für eine Dichtung geeignet.

Durch Vermischen des Harzes für das Leitermaterial mit elektrisch leitenden Partikeln läßt sich vorteilhafterweise so gut wie jede gewünschte elektrische Leitfähigkeit des Harzes für das Leitermaterial auf besonders einfache Weise herstellen.

Das Harz des Trägermaterials und/oder das Harz für das Leitermaterial kann mit die Festigkeit verbessernden Fasern vermischt werden, wodurch sich auf vorteilhafte Weise eine besonders hohe mechanische Festigkeit des Verbundkörpers ergibt.

Für die elektrisch leitenden Partikel des Leitermaterials können Partikel aus Silber verwendet werden, wodurch sich ein besonders niedriger Widerstand innerhalb des Leitermaterials ergibt.

Durch Vorsehen von mit dem Leitermaterial verbundenen Kontaktstellen läßt sich die Leitung an dem Verbundkörper auf vorteilhafte Weise kontaktieren.

Vor Zusammenbau der Leitungsdurchführung z. B. innerhalb eines Stoßdämpfers, kann ein elektrisches Bauteil oder mehrere elektrische Bauteile mit dem Leitermaterial des Verbundkörpers der Leitungsdurchführung elektrisch verbunden werden, wodurch sich eine prüffähige Vormontagegruppe bildet, die bereits elektrisch komplett sein kann und sich damit bereits vor Einbau in den Stoßdämpfer prüfen läßt. Durch Einbau der Vormontagegruppe in das herzustellende Endprodukt sind keine Änderungen der elektrischen Eigenschaften zu erwarten bzw. diese können ausgeschlossen werden.

Darüber hinaus hat die erfindungsgemäße Leitungsdurchführung noch die folgenden besonderen Vorteile: Die Leitungsdurchführung kann kurzbauend gestaltet sein. Die erfindungsgemäße Leitungsdurchführung ist besonders gut für eine Massenproduktion geeignet und damit preisgünstig herstellbar. Die Form und Gestalt des Leitermaterials ist je nach Bedarf beliebig herstellbar. Die Leitungsdurchführung kann so gestaltet sein, daß sämtliche Kontakte nur auf einer Seite des Verbundkörpers vorzunehmen sind. Gegenüber anderen Leitungsdurchführungen ergibt sich ein erheblicher Raumgewinn, da Kabel nicht durchgezogen werden müssen. Die anzuschließenden elektrischen Bauteile können zusammen mit dem Verbundkörper zu einer Baugruppe zusammengefaßt werden. Es ergeben sich kürzere Kabellängen. Das Leitermaterial kann in jeder gewünschten Anzahl, Breite oder Form im Verbundkörper vorgesehen werden.

### Zeichnung

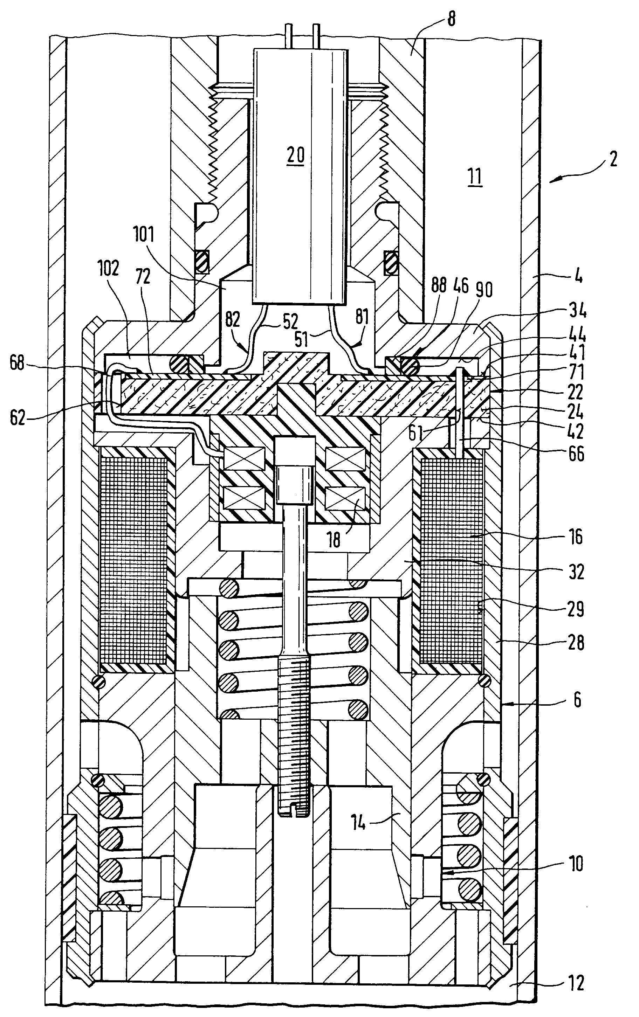

Ein ausgewähltes, besonders vorteilhaftes Ausführungsbeispiel der Leitungsdurchführung ist in der Zeichnung vereinfacht dargestellt und in der nachfolgenden Beschreibung näher erläutert.

### Beschreibung eines Ausführungsbeispiels

Die erfindungsgemäße Leitungsdurchführung läßt sich bei jedem Gegenstand anwenden, bei dem mindestens zwei Räume vorhanden sind, wobei diese beiden Räume voneinander getrennt sein sollen und mindestens eine Leitung aus einem der beiden Räume in den jeweils anderen Raum führen soll. Die Leitungsdurchführung kann auch von außen in den Gegenstand hineinführen. D.h., einer dieser Räume ist die Umgebung in der sich der Gegenstand befindet.

Die besonderen Vorteile der erfindungsgemäßen Leitungsdurchführung ergeben sich insbesondere bei einem Stoßdämpfer, da bei einem Stoßdämpfer teilweise hohe Druckunterschiede zwischen den verschiedenen voneinander zu trennenden Räumen gegeben sind und weil die Leitungsdurchführung eine sichere Abdichtung auch hoher Drücke gewährleistet und erhebliche Vorteile bezüglich deren Raumbedarf bietet. Diese Leitungsdurchführung ist besonders gut für Stoßdämpfer für Kraftfahrzeuge geeignet.

Die Zeichnung zeigt ausschnittsweise einen Stoßdämpfer 2 mit einem Zylinder 4, einem Dämpferkolben 6 und einer Kolbenstange 8. Die Kolbenstange 8 ist beispielsweise mit einem Aufbau und der Zylinder 4 ist beispielsweise mit einer Fahrwerksachse eines Kraftfahrzeuges verbunden.

In der Zeichnung ist der Übersichtlichkeit wegen nur der Bereich des Stoßdämpfers 2 dargestellt, in dem sich der Dämpferkolben 6 befindet.

Der Dämpferkolben 6 ist innerhalb des Zylinders 4 verschiebbar angeordnet und mit einer Strömungsverbindung 10 versehen. Oberhalb des Dämpferkolbens 6 befindet sich ein erster Arbeitsraum 11 und unterhalb des Dämpferkolbens 6 gibt es einen zweiten Arbeitsraum 12. Der Zylinder 4 und die Arbeitsräume 11, 12 sind ebenfalls nur teilweise dargestellt.

Die Strömungsverbindung 10 dient zum Verbinden der beiden Arbeitsräume 11, 12. Ein durch die Strömungsverbindung 10 strömendes Druckmedium kann mit Hilfe eines Steuerschiebers 14 gesteuert werden. Der Steuerschieber 14 ist durch einen Elektromagneten 16 verstellbar. Je nach Bestromung des Elektromagneten 16 ist die Strömungsverbindung 10 mehr oder weniger geöffnet. Mit Hilfe eines elektrischen Sensors 18 kann die Stellposition des Steuerschiebers 14 erfaßt werden.

Die Kolbenstange 8 ist hohl ausgebildet. Innerhalb der Kolbenstange 8 befindet sich eine Steuer- bzw. Auswerteelektronik 20.

Innerhalb des Dämpferkolbens 6 ist ein Verbundkörper 22 vorgesehen. Der Verbundkörper 22 besteht im wesentlichen aus einem Trägermaterial 24.

Der Dämpferkolben 6 umfaßt ein Gehäuse 28. In eine ggf. abgestuft ausgeführte Eindrehung 29 des Gehäuses 28 ist der Verbundkörper 22 eingelegt. Ebenfalls in der Eindrehung 29 sind der Elektromagnet 16, ein Drehteil 32 und ein Verbindungsteil 34. Das Verbindungsteil 34 besteht im wesentlichen aus zwei Bereichen mit verschiedenen Durchmessern. Der Bereich des Verbindungsteils 34 mit dem kleineren Durchmesser ragt axial über das Gehäuse 28 hinaus und ist mit der Kolbenstange 8 verschraubt. Ein Ende des Gehäuses 28 ist plastisch so weit verformt, daß der Bereich des Verbindungsteils 34 mit dem größeren Durchmesser vom Gehäuse 28 gehalten wird, wobei das Verbindungsteil 34 den Elektromagneten 16, das Drehteil 32 und den Verbundkörper 22 innerhalb des Gehäuses 28 festhält.

Der Verbundkörper 22 hat in etwa die Form einer runden Scheibe mit einer ersten Stirnseite 41 und einer zweiten Stirnseite 42. Auf der ersten Seite 41 befindet sich das Verbindungsteil 34, die Elektronik 20 und die Kolbenstange 8. Die zweite Stirnseite 42 ist dem Sensor 18, dem Elektromagneten 16, dem Steuerschieber 14 und der Strömungsverbindung 10 zugewandt.

Auf einer dem Verbundkörper 22 zugewandten Stirnseite des Verbindungsteils 34 ist eine umlaufende Nut 44 vorgesehen. In die Nut 44 ist eine Dichtung 46 eingelegt. Die Dichtung 46 liegt einerseits an dem Verbindungsteil 34 und andererseits an der ersten Stirnseite 41 des Verbundkörpers 22 an. Die Dichtung 46 ist vorgesehen, um ein Strömen eines Druckmediums zwischen dem Verbindungsteil 34 und dem Verbundkörper 22 entlang der ersten Stirnseite 41 zu verhindern.

Die Elektronik 20 ist über einen ersten elektrischen Anschlußdraht 51 mit dem Elektromagneten 16, sowie über einen zweiten Anschlußdraht 52 mit dem Sensor 18 verbunden.

In dem Verbundkörper 22 sind eine erste Aussparung 61 und eine zweite Aussparung 62 vorgesehen. Die Aussparungen 61, 62 verlaufen von der ersten Stirnseite 41 zur zweiten Stirnseite 42. Der Elektromagnet 16 hat einen Anschlußfuß 66. Der Anschlußfuß 66 ist ein Metallstift und ragt, ausgehend von dem Elektromagneten 16, durch das Drehteil 32 und durch die Aussparung 61 des Verbundkörpers 22 hindurch. Der Anschlußfuß 66 steht auf der ersten Stirnseite 41 etwas über den Verbundkörper 22 hinaus. Der Sensor 18 hat einen Anschlußdraht 68. Dieser Anschlußdraht 68 verläuft, ausgehend vom Sensor 18, durch die zweite Aussparung 62 hindurch und endet im Bereich der ersten Stirnseite 41 des Verbundkörpers 22.

Auf der ersten Stirnseite 41 des Verbundkörpers 22 ist in das Trägermaterial 24 ein erstes Leitermaterial 71 und ein zweites Leitermaterial 72 eingeformt. Die beiden Leitermaterialien 71, 72 verlaufen in dem dargestellten Ausführungsbeispiel im wesentlichen in radialer Richtung und haben keine elektrische Verbindung zueinander. Das erste Leitermaterial 71 und das zweite Leitermaterial 72 erstrecken sich in radialer Richtung beiderseits über die Dichtung 46 hinaus. Die erste Aussparung 61 ist so vorgesehen, daß diese das erste Leitermaterial 71 außerhalb eines Außenumfangs der Dichtung 46 durchdringt. An dieser Stelle auf der ersten Stirnseite 41 ist der Anschlußfuß 66 mit dem ersten Leitermaterial 71 elektrisch verbunden. Innerhalb eines von der Dichtung 46 umschriebenen Innenumfangs ist der erste Anschlußdraht 51 mit dem ersten Leitermaterial 71 elektrisch verbunden. Der Anschlußdraht 68 ist außerhalb des von der Dichtung 46 gebildeten Außenumfangs an seinem Ende mit dem zweiten Leitermaterial 72 elektrisch verbunden, und der zweite Anschlußdraht 52 ist innerhalb des von der Dichtung 46 umschriebenen Innenumfangs mit dem zweiten Leitermaterial 72 elektrisch verbunden. Die Anschlußdrähte 51, 52, 68 sind vorzugsweise mit einer Isolierschicht ummantelt, ausgenommen die mit dem Leitermaterial 71, 72 verbundenen Enden.

Der erste Anschlußdraht 51, das erste Leitermaterial 71 und der Anschlußfuß 66 sind Bestandteile eines ersten elektrischen Leiters 81. Der zweite Anschlußdraht 52, das zweite Leitermaterial 72 und der Anschlußdraht 68 gehören zu einem zweiten elektrischen Leiter 82. Der Leiter 81 verbindet den Elektromagneten 16 mit der Elektronik 20, und über den Leiter 82 ist der Sensor 18 mit der Elektronik 20 verbunden. Der Leiter 81 gehört zu einer zweipoligen Leitung zwischen der Elektronik 20 und dem Elektromagneten 16 und der Leiter 82 gehört zu einer Leitung zwischen der Elektronik 20 und dem Sensor 18.

Das Trägermaterial 24 des Verbundkörpers 22 besteht vorzugsweise aus einem Kunststoff, speziell aus einem Harz. In das Harz können zur mechanischen Verstärkung des Verbundkörpers 22 Fasern beigemischt sein. Die Fasern sind z. B. Glasfasern. Der Werkstoff für das Leitermaterial 71, 72 besteht vorzugsweise ebenfalls aus Harz und einem leitfähigen Pigment. Dieses Harz für das Leitermaterial 71, 72 ist mit elektrisch leitenden Partikeln vermischt. Diese Partikel bestehen beispielsweise aus Silber und sind beispielsweise kleiner als 0,01 mm. Sind die Partikel Silber so erhält man einen besonders kleinen elektrischen Widerstand innerhalb des Leitermaterials 71, 72. Muß dieser Widerstand nicht besonders klein sein, so können die Partikel z. B. auch aus Ruß, Graphit, Kohle oder dgl. bestehen.

Herstellen kann man den Verbundkörper 22, indem man z.B. die Paste aus Silberpartikeln und Harz des Leitermaterials 71, 72 bzw. eine Mischung aus Silberpartikel und Harz auf einen hochglanzpolierten Stempel sprüht oder im Siebdruckverfahren aufbringt. Dann wird in ein Preßwerkzeug das Material für das Trägermaterial 24 gefüllt. Unter hohem Druck und hoher Temperatur werden danach das Trägermaterial und das Leitermaterial gemeinsam verpreßt. Wegen des gleichen oder zumindest weitgehend gleichen Harzes für das Trägermaterial 24 und das Leitermaterial 71, 72 erhält man eine sehr innige Verbindung zwischen dem Trägermaterial 24 und den Leitermaterialien 71, 72 , weiterhin eine erhebliche Verdichtung und eine spiegelglatte Oberfläche insbesondere auch der ersten Stirnseite 41.

Die Herstellung des Verbundkörpers 22 kann nach dem in "Elektronik 21 / 19.10.1984, Werkstoffe für die Elektrik" auf den Seiten 104 und 105 beschriebenen "Leitplastik-Preßverfahren" erfolgen.

Die Leitermaterialien 71, 72 können in jeder gewünschten Anzahl, Breite oder Form auf den Stempel aufgebracht, d.h. in das Trägermaterial 24 hineingeformt werden.

Innerhalb der hohl ausgebildeten Kolbenstange 8 und dem in axialer Richtung ausgebohrten Verbindungsteil 34 wird ein erster Raum 101 gebildet. Der erste Raum 101 geht bis zur Dichtstelle, wo die Dichtung 46 zwischen dem Verbundkörper 22 und dem Verbindungsteil 34 abdichtet. Bei dem dargestellten Ausführungsbeispiel hat der erste Raum 101 Verbindung zur Atmosphäre.

Auf der anderen Seite der Dichtstelle, d.h. bei dem Ausführungsbeispiel außerhalb des Außenumfangs der Dichtung 46, wird ein zweiter Raum 102 gebildet. Dieser Raum 102 steht über die Aussparungen 61, 62 und/oder über Spalte am Außenumfang des Verbundkörpers 22, sowie über weitere Spalte, Öffnungen, Spiele oder dgl. mit dem zweiten Arbeitsraum 12 in Verbindung. Auch der Elektromagnet 16 und der Sensor 18 befinden sich im Einflußbereich des im zweiten Arbeitsraum 12 herrschenden Druckes. Je nach Ausführung des Stoßdämpfers 2 kann in dem zweiten Raum 102 ein sehr hoher Druck herrschen. Der Druck in dem zweiten Raum 102 kann z.B. bis zur Höhe des in dem zweiten Arbeitsraum 12 herrschenden Druckes ansteigen. Der Druck in dem ersten Raum 101 entspricht bei dem Ausführungsbeispiel weitgehend dem normalen atmosphärischen Druck. D. h., im Bereich der Dichtung 46 muß, je nach Anwendungsfall, eine hohe Druckdifferenz abgedichtet werden.

Durch die spezielle Fertigungsweise des Verbundkörpers 22 erhält man an der ersten Stirnseite 41, an der mit Hilfe der Dichtung 46 abgedichtet wird, eine sehr gute Oberflächengüte. Diese Oberflächengüte ist zum Abdichten mit Hilfe gummielastischer oder plastisch verformter Dichtungen bestens geeignet. Infolge der innigen Verbindung zwischen dem Leitermaterial 71, 72 und dem Trägermaterial 24 besteht auch innerhalb des Verbundkörpers 22 keinerlei Gefahr einer Undichtheit. Die Nut 44 kann so gestaltet werden, daß für die Dichtung 46 beste Einbaubedingungen geschaffen sind.

Der erste Anschlußdraht 51 kann mit dem Leitermaterial 71 direkt durch Löten verbunden sein. Es ist aber auch möglich, am Verbundkörper 22 eine Kontaktstelle, wie z.B. eine Lötfahne, vorzusehen, die mit dem Leitermaterial 71 verbunden ist. Der Anschlußdraht 51 kann auch an dieser Kontaktstelle anschließen. In gleicher Weise wie der Anschlußdraht 51 können auch die anderen Anschlußdrähte 52, 68 und der Anschlußfuß 66 mit den Leitermaterialien 71, 72 verbunden sein. Da der Fachmann die Kontaktstelle leicht herstellen kann, ist die Kontaktstelle der Übersichtlichkeit wegen nicht bildlich dargestellt.

In dem dargestellten Ausführungsbeispiel umfaßt die Dichtung 46 einen Stützring 88 und einen Dichtring 90. Der Dichtring 90 besteht z. B. aus einem gummielastischen Material und der Stützring 88 ist z. B. aus einem Hartkunststoff gefertigt. Der Stützring 88 verhindert ein Auswandern des Dichtringes 90 in den ersten Raum 101 hinein.

Die erste Stirnseite 41 mit dem Leitermaterial 71, 72 verläuft in dem dargestellten Ausführungsbeispiel im wesentlichen in radialer Richtung. Es ist selbstverständlich auch möglich, den Verbundkörper 22 so vorzusehen, daß die Oberfläche dieses Verbundkörpers, in der sich das Leitermaterial 71, 72 befindet, z. B. in axialer Richtung sich erstreckt. Auch in diesem Fall ist es einfach, durch Schaffen eines geeigneten Einbauraumes für die Dichtung 46 dafür zu sorgen, daß die Dichtung 46 gegen die Oberfläche des Verbundkörpers 22 mit ausreichender Vorspannung gedrückt wird.

Für die Dichtung 46 kann auch jede andere dem Fachmann bekannte Dichtung verwendet werden. Die Dichtung 46 kann z. B. auch aus mehreren Dichtringen unterschiedlichen Durchmessers bestehen.

Der Verbundkörper 22, der Elektromagnet 16, der Sensor 18, die Elektronik 20 und die entsprechenden Leitungen mit den Leitern 81, 82 können zu einer Vormontagegruppe zusammengefügt werden, bevor die Kolbenstange 8 mit dem Dämpferkolben 6 verbunden wird. Dies bietet den Vorteil, daß das einwandfreie Arbeiten dieser Vormontagegruppe geprüft werden kann, bevor die Vormontagegruppe fest in den Stoßdämpfer eingebaut wird.

Bei dem angegebenen Ausführungsbeispiel müssen nur auf einer Seite, d. h. auf der Stirnseite 41, die Anschlußdrähte 51, 52, 68 und der Anschlußfuß 66 mit dem entsprechenden Leitermaterial 71, 72 verbunden werden. Dies vereinfacht die Montage sehr und ist deshalb ein wesentlicher Vorteil.

In dem dargestellten Ausführungsbeispiel sind zwei elektrische Bauteile vorhanden. Eines dieser elektrischen Bauteile ist der Elektromagnet 16 und das andere elektrische Bauteile ist der Sensor 18. Selbstverständlich können auch weitere bzw. andere elektrische Bauteile vorgesehen sein, die ebenfalls mit Hilfe weiterer Leiter über die Leitungsdurchführung mit der Elektronik 20 verbunden sind.

Wie das Ausführungsbeispiel zeigt, sind die elektrischen Bauteile 16, 18 und die Leitungsdurchführung innerhalb des Dämpferkolbens 6 vorgesehen. Dies ist nur beispielhaft. Die Leitungsdurchführung kann selbstverständlich auch an jeder anderen Stelle eines Stoßdämpfers, wie z. B. an einer Stirnseite des Zylinders 4 bzw. außerhalb des Zylinders 4 vorgesehen sein.

Je nach Anzahl der aus einem der beiden Räume 101, 102 in den jeweils anderen Raum durchzuführenden Leiter bzw. Leitungen, sind in entsprechender Anzahl die Leitermaterialien 71, 72 am Verbundkörper 22 vorzusehen.

Je nach Art des für den Verbundkörper 22 verwendeten Harzes kann es günstig sein, den gesamten Verbundkörper, abgesehen von den Kontaktstellen zum Anschluß der elektrischen Leiter, mit einem vorzugsweise dünnen Schutzfilm zu überziehen.

Bei der Herstellung der Leitungsdurchführung zwischen den beiden Räumen 101, 102 kann wie folgt verfahren werden:
Der Verbundkörper 22 wird, wie vorstehend beschreiben, aus dem Trägermaterial 24 und mindestens einem Leitermaterial 71, 72 gebildet.

An wenigstens einem der Leitermaterialien 71, 72 sind an verschiedenen Stellen mindestens zwei Kontaktierungen vorgesehen. Beim fertigen Produkt ragt mindestens eine Kontaktierung in den Raum 101 und mindestens eine Kontaktierung in den Raum 102. Die Dichtung 46 wird so angeordnet, daß sie zwischen der mindestens einen im Raum 101 sich befindenden Kontaktierung und der mindestens einen in den Raum 102 ragenden Kontaktierung verläuft. Im Ausführungsbeispiel sind an den in den Raum 101 ragenden Kontaktierungen die Anschlußdrähte 51, 52 angelötet und mit den im Raum 102 sich befindenden Kontaktierungen sind der Anschlußfuß 66 bzw. der Anschlußdraht 68 verbunden. Die Verbindung der Anschlußdrähte 51, 52, 68 bzw. des Anschlußfußes 66 mit den Kontaktierungen kann, je nach Bedarf, vor oder nach Einbau des Verbundkörpers 22 in den Dämpferkolben 6 bzw. vor oder nach Einbau der Dichtung 46 erfolgen.

## Patentansprüche

1. Leitungsdurchführung, insbesondere bei einem Stoßdämpfer, für mindestens eine aus einem ersten Raum in einen zweiten Raum führende Leitung, dadurch gekennzeichnet, daß ein zwischen den beiden Räumen (101, 102) sich erstreckender Verbundkörper (22) und eine an einer Oberfläche (41) des Verbundkörpers (22) die beiden Räume (101, 102) voneinander trennende Dichtung (46) vorgesehen ist, wobei der Verbundkörper (22) aus wenigstens einem Trägermaterial (24) und einem Leitermaterial (71, 72) gebildet ist und die Leitung (81, 82) im Bereich der Dichtung (46) durch das Leitermaterial (71, 72) verläuft.

2. Leitungsdurchführung nach Anspruch 1, dadurch gekennzeichnet, daß der Verbundkörper (22) mindestens ein weiteres Leitermaterial (71, 72) umfaßt.

3. Leitungsdurchführung nach Anspruch 1 oder Anspruch 2, dadurch gekennzeichnet, daß das Trägermaterial (24) aus einem Kunststoff besteht, in den das Leitermaterial (71, 72) eingeformt ist.

4. Leitungsdurchführung nach einem der Ansprüche 1 bis 3, dadurch gekennzeichnet, daß das Trägermaterial (24) und das Leitermaterial (71, 72) gleichartige Harze enthält.

5. Leitungsdurchführung nach Anspruch 4, dadurch gekennzeichnet, daß das Harz für das Leitermaterial (71, 72) mit elektrisch leitenden Partikeln vermischt ist.

6. Leitungsdurchführung nach Anspruch 4 oder 5, dadurch gekennzeichnet, daß das Harz für das Trägermaterial (24) mit die Festigkeit des Trägermaterials (24) verbessernden Fasern vermischt ist.

7. Leitungsdurchführung nach Anspruch 5, dadurch gekennzeichnet, daß die elektrisch leitenden Partikel aus Silber bestehen.

8. Leitungsdurchführung nach einem der vorhergehenden Ansprüche, dadurch gekennzeichnet, daß an dem Verbundkörper (22) mindestens auf einer Seite der Dichtung (46) mindestens eine mit dem Leitermaterial (71, 72) verbundene Kontaktstelle vorhanden ist.

9. Leitungsdurchführung nach Anspruch 1, dadurch gekennzeichnet, daß eine aus dem Verbundkörper (22) und mindestens einem mit dem Leitermaterial (71, 72) elektrisch verbundenen elektrischen Bauteil (16, 18) eine prüffähige Vormontagegruppe gebildet ist.

10. Verfahren zur Herstellung einer Leitungsdurchführung, insbesondere bei einem Stoßdämpfer, die zur Durchführung mindestens einer Leitung aus einem ersten Raum (101) in einen zweiten Raum (102) dient, insbesondere zur Herstellung einer Leitungsdurchführung nach einem der Ansprüche 1 bis 9, dadurch gekennzeichnet, daß aus mindestens einem Trägermaterial (24) und wenigstens einem Leitermaterial (71, 72) ein Verbundkörper (22) gebildet wird, sowie an mindestens einem Leitermaterial (71, 72) wenigstens zwei Kontaktierungen an verschiedenen Stellen vorgesehen werden und eine zwischen unterschiedlichen Kontaktierungen verlaufende Dichtung (46) angeordnet wird.

11. Verfahren nach Anspruch 10, dadurch gekennzeichnet, daß vor einem Einbau der Leitungsdurchführung der Verbundkörper (22) und mindestens ein mit dem Leitermaterial (71, 72) elektrisch verbundenes elektrisches Bauteil (16, 18) zu einer prüffähigen Vormontagegruppe zusammengeführt wird.
